# FASCICULE DE BREVET EUROPEEN

(11) **EP 4 194 224 B1**
(45) Date de publication et mention de la délivrance du brevet: **25.09.2024**
(21) Numéro de dépôt: 22212915.7
(22) Date de dépôt: 12.12.2022
(51) Int. Cl.: B60B 1/00, B60B 1/06, B60B 19/10, F03D 9/32

(54) **ORGANE ROTATIF**
ROTIERENDES ELEMENT
ROTARY MEMBER

(30) Priorité: 13.12.2021 FR 2113354
(43) Date de publication de la demande: 14.06.2023
(73) Titulaire: Pager Innov, 24660 Coulounieix-Chamiers (FR)
(72) Inventeur: GERVAIS, Jacques, 24000 PERIGUEUX (FR); PAVAILLON, Joël, 24660 COULOUNIEIX-CHAMIERS (FR)
(74) Mandataire: Aquinov

(56) Documents cités:
- WO-A1-2018/211055
- WO-A1-99/48704
- DE-U1- 7 903 639
- FR-A1- 3 067 762

## Description

### Domaine technique.

L'invention se rapporte au domaine technique des organes rotatifs munis de pales, notamment de type roue de vélo ou rotor d'éolienne.

### Etat de la technique.

Les organes rotatifs que nous connaissons habituellement, en particulier les roues de vélo comportent entre leur axe central et la couronne sur laquelle le pneu est monté, une pluralité de rayons. Toutefois, ce type d'organe rotatif ne permet pas à l'utilisateur d'optimiser entièrement sa force de propulsion puisque lors de l'utilisation du vélo, l'air passe sur les divers rayons mais la force du vent n'est pas utilisée. Il existe également des roues de vélo dans lesquelles les rayons sont remplacés par des pales pour capter la force du vent de manière à améliorer la coefficient de pénétration. Toutefois lors de l'utilisation de ces pales, le coefficient de pénétration qui est avantageusement utilisé lorsque la pale est en position haute, se voit annulé lorsque cette même pale se retrouve en position basse. De ce fait le coefficient de pénétration ne peut être utilisé avec ce type de structure entrainant un rendement de la roue qui n'est Un tel organe rotatif est connu du Document FR3067762A. pas optimal.

Cet inconvénient se retrouve également dans s'autres types d'organes rotatifs équipés de pales et notamment dans les rotors des éoliennes.

L'invention se place donc dans ce contexte et cherche à résoudre l'ensemble des inconvénients précités. Ainsi, l'invention cherche à proposer un organe rotatif permettant d'utiliser et d'optimiser l'exploitation de la force du vent quelle que soit sa provenance tout en augmentant le rendement de l'organe rotatif.

### Présentation de l'invention.

L'invention a pour objet un organe rotatif comportant les caractéristiques de la revendication 1.

L'organe rotatif peut être adaptée pour différents types d'utilisation dans lesquels ledit organe rotatif est adapté pour coopérer avec du vent. L'organe rotatif peut être fabriqué en matériau composite, en carbone, en kevlar, en aluminium. Dans un mode de réalisation, l'organe rotatif peut être formé par moulage ou par injection.

Les trois pales peuvent présenter sensiblement une forme d'esse c'est-à-dire que chaque pale peut comporter une forme légèrement courbée. Dans un mode de réalisation, l'organe rotatif peut comporter quatre pales. Dans un autre mode de réalisation, l'organe rotatif peut comporter cinq, six ou sept pales.

Chacune des pales est reliée aux autres pales par un moyeu central. Le moyeu central peut être sensiblement circulaire. Le moyeu peut comporter en son centre un axe de rotation agencé pour coopérer avec une tige d'un élément d'entrainement sur lequel l'organe rotatif est monté. Le moyeu central peut recevoir un axe à roulement à billes ou ou un axe à roulement céramique ou un axe à aiguilles muni d'un axe creux ou plein.

Chaque pale comporte deux extrémités. Une première extrémité de chaque pale peut présenter une forme concave adaptée pour sensiblement épouser une courbure du moyeu central. Ainsi, chaque pale peut présenter une continuité avec le moyeu central de sorte que ledit moyeu et lesdites pales puissent former une pièce unique. Chaque pale peut comporter deux faces latérales sensiblement symétriques l'une par rapport à l'autre.

Chaque face latérale peut comporter une gorge de sorte que chaque pale peut comporter deux gorges. Chaque gorge peut s'étendre sur toute la longueur de la face de la pale. Chaque gorge peut présenter une forme d'esse sensiblement similaires à celle de la pale. Chaque gorge peut s'étendre sur toute la longueur de la face de la pale. Dans un mode de réalisation particulier, chaque gorge peut s'étendre sur une partie seulement de la longueur de la face de la pale. Dans un autre mode de réalisation, la gorge peut s'étendre sur une portion du moyeu central.

Chaque pale comporte au moins un canal. Le canal de chaque pale peut comporter deux extrémités, une première extrémité pouvant déboucher dans la gorge de cette pale et une deuxième extrémité pouvant déboucher en vis-à-vis de la gorge d'une pale adjacente à ladite pale, le canal traversant le moyeu central entre ces deux extrémités. Ainsi, le canal peut déboucher dans deux pales adjacentes et différentes. Le canal peut ainsi permettre la communication entre deux pales adjacentes. La présence du canal peut permettre d'utiliser le passage de l'air dans le canal pour le transformer en force de pénétration et ainsi améliorer le rendement de l'organe rotatif. Par exemple, dans le cadre d'une roue, les canaux permettent de réduire la consommation d'énergie utilisée pour faire tourner l'organe rotatif, que la propulsion employée soit mécanique, électrique ou thermique. De même, dans le cadre d'une éolienne, les canaux permettent de diminuer l'impact des frottements sur les pales de sorte que le rendement de l'éolienne soit optimal.

Avantageusement, chaque gorge comporte une première paroi et une deuxième paroi opposées reliées par un fond, et le canal de chaque pale débouche dans le fond de la gorge de ladite pale d'une part et dans le moyeu en vis-à-vis de la gorge de ladite pale adjacente.

Chaque gorge peut comporter une forme de U. Chaque première extrémité de chaque canal peut être en continuité avec une portion du fond de la gorge au niveau de la pale. Dans un mode de réalisation, la première extrémité de chaque canal peut être en continuité avec une portion du fond de la gorge au niveau du moyeu central. La deuxième extrémité peut être formée dans le moyeu central.

Avantageusement, le canal de chaque pale comporte une ouverture, ladite ouverture étant dans le moyeu en vis-à-vis de la gorge de ladite pale adjacente.

L'ouverture formant la deuxième extrémité de chaque canal peut se présenter sous la forme d'une fente. Dans un autre mode de réalisation ladite ouverture peut se présenter sous la forme d'un passage d'une épaisseur correspondant sensiblement à un écartement des deux parois de la gorge, de sorte que ledit canal puisse avoir des dimensions similaires à celles de la gorge. Ainsi, une majeure partie, voire la totalité de de l'air passant par ledit canal peut être transmis à la gorge de la pale adjacente.

Avantageusement, chaque pale comporte un élément de fixation monté à l'extrémité opposée à celle reliée au moyeu central.

Chaque élément de fixation peut comporter des dimensions sensiblement similaires aux dimensions d'une deuxième extrémité de la pale sur laquelle elle est montée. L'élément de fixation peut être monté en continuité avec ladite pale sur laquelle il est monté de sorte que ledit élément de fixation et ladite pale puissent former une pièce unique.

Avantageusement, chaque face de chaque pale comporte une gorge et un canal montés symétriquement l'un par rapport à l'autre.

Chaque face peut comporter deux gorges symétriques l'une par rapport à l'autre et deux canaux symétriques l'un par rapport à l'autre.

Le moyeu central peut comporter deux face latérales symétriques l'une par rapport à l'autre de sorte que le moyeu puisse comporter deux corps de deux canaux d'une même pale. Ainsi chaque face du moyeu central peut comporter quatre corps de canal.

Avantageusement, chaque face latérale de chaque pale comporte un premier bord de fuite formé par un bord de la première paroi de la gorge de ladite face latérale et un deuxième bord de fuite formé par un bord de la deuxième paroi de la gorge de ladite face latérale.

Chaque face latérale comportant un premier bord de fuite, la pale peut ainsi comporter deux premiers bords de fuite dirigés dans un sens sensiblement identique et dans une direction similaire.

Chacun des premiers bords de fuite peut être dirigé dans un sens sensiblement identique et dans une direction similaire au deuxième bord de fuite.

Avantageusement, les deuxièmes bords de fuite des faces latérales d'une même pale sont confondus.

Chaque face latérale peut comporter un deuxième bord de fuite de sorte que les deux dits deuxième bords de fuite de chaque face latérale forment une pièce unique. Le deuxième bord de fuite pouvant comporter deux faces latérales, chacune des faces latérales correspondant à un bord de la deuxième paroi de chacune des gorges. Ainsi chaque pale peut comporter deux premiers bords de fuite et un unique deuxième bord de fuite.

Avantageusement, chaque pale présente une section en trident, l'extrémité de chaque dent dudit trident formant l'un des premiers et deuxième bords de fuite, la gorge de chaque face latérale de ladite pale étant formée entre deux dents dudit trident, et dans laquelle les deux premiers bord de fuite sont sensiblement parallèles entre eux.

La section en trident peut comporter deux dents distales correspondant chacune à un premier bord de fuite d'une des faces latérales de la pale. Chaque dent distale peut présenter une face externe et une face interne. La face externe d'une dent distale rejoint la face externe de l'autre dent distale pour former un bord d'attaque de ladite pale. Les deux faces externes des deux dents distales peuvent former un dos de la pale. La face interne de chaque premier bord de fuite peut être confondu avec la première paroi de la gorge.

La section en trident peut également comporter une dent médiane. La dent médiane peut comporter deux faces externes symétriques par rapport à un plan de symétrie de ladite pale. Le cas échéant, les deux dites faces externes peuvent se rejoindre pour former le deuxième bord de fuite de la pale. Chaque face externe de la dent médiane peut être confondue avec la deuxième paroi de la gorge.

Chaque face externe de la dent médiane peut être en vis-à-vis de la face interne de la dent distale qui lui fait face.

Cette section en trident permet à l'organe rotatif de capter dans chaque gorge et/ou dans chaque canal, la force du vent quelle que soit la direction d'arrivée du vent, aussi faible soit-il.

Avantageusement, les pales sont reliées entre elles par une couronne périphérique, chaque élément de fixation de chaque pale étant monté entre ladite pale et ladite couronne périphérique.

La couronne périphérique peut être montée à demeure sur chacun des éléments de fixation. Notamment, dans ce mode de réalisation, la couronne périphérique, les éléments de fixation, les pales et le moyeux central peuvent former une pièce unique dans laquelle lesdits éléments de fixation sont des éléments de liaison entre lesdites pales et ladite couronne. Dans un autre mode de réalisation, la couronne périphérique peut être montée de manière amovible sur chacun des éléments de fixation. Chaque élément de fixation peut permettre une adaptation des pales à tout type de couronne périphérique.

Un autre aspect de l'invention concerne un vélo comportant une organe rotatif, ledit organe rotatif formant une roue dudit vélo.

L'organe rotatif est monté sur le vélo de sorte que la pale qui se trouve dans la partie basse de la roue pendant le mouvement présente chacune de ses gorges tournée dans la direction d'avancement du vélo.

Un autre aspect de l'invention concerne une éolienne comportant une organe rotatif, ledit organe rotatif formant un rotor de ladite éolienne.

L'organe rotatif est monté sur le rotor de l'éolienne de sorte que chaque pale peut recevoir du vent quelle que soit la direction dans laquelle il arrive.

### Brève description des figures.

D'autres avantages et caractéristiques de la présente invention sont maintenant décrits à l'aide d'exemples uniquement illustratifs et nullement limitatifs de la portée de l'invention, et à partir des dessins annexés, dessins sur lesquels les différentes figures représentent :
[Fig.1] représente schématiquement une vue latérale d'un organe rotatif selon un mode de réalisation.
[Fig.2] représente schématiquement une vue latérale et partielle d'un organe rotatif selon un mode de réalisation.
[Fig.3] représente schématiquement une vue en coupe transversale d'une pale d'un organe rotatif selon un mode de réalisation.
[Fig.4] représente schématiquement une vue en perspective de face d'un organe rotatif selon un mode de réalisation.
[Fig.5] représente un organe rotatif en une vue latérale selon un mode de réalisation dans lequel l'organe rotatif est une roue de vélo.

Dans la description qui suit, les éléments identiques, par structure ou par fonction, apparaissant sur différentes figures conservent, sauf précision contraire, les mêmes références.

### Description des modes de réalisation.

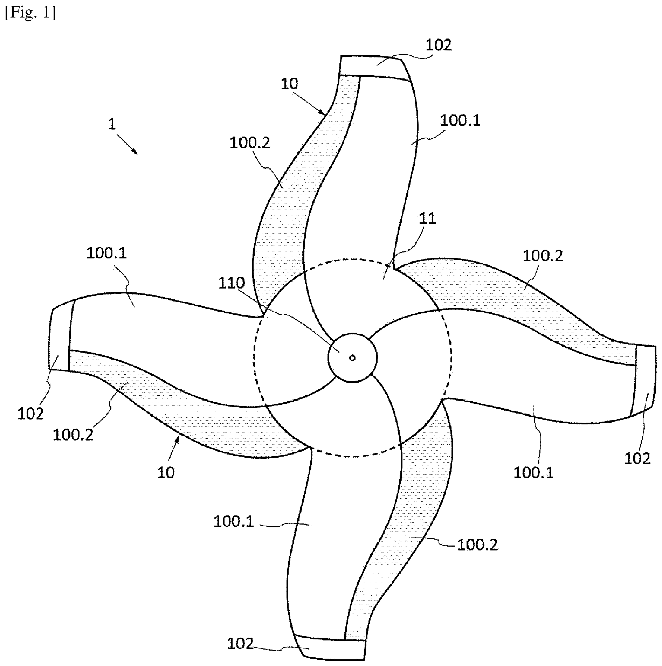

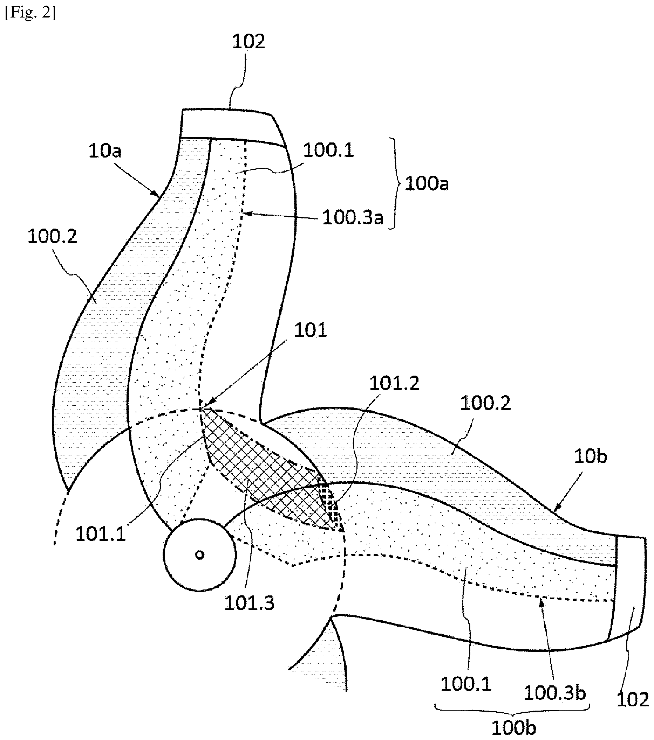

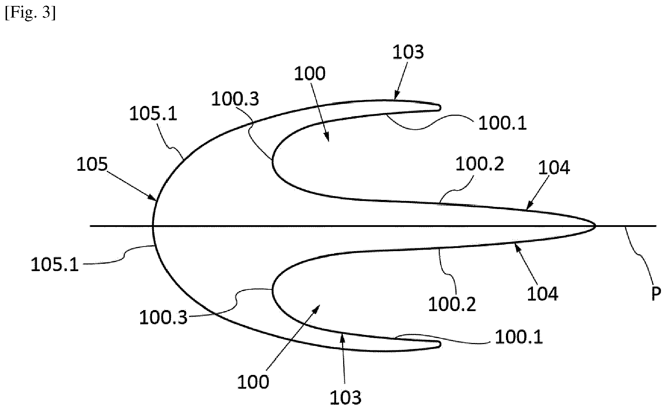

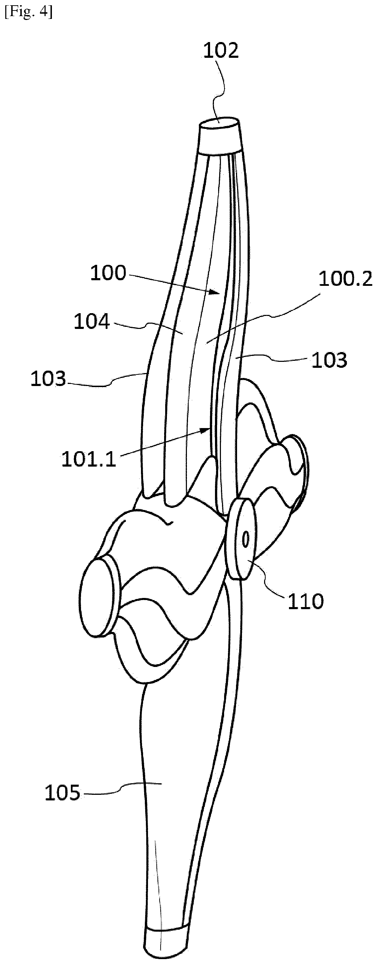

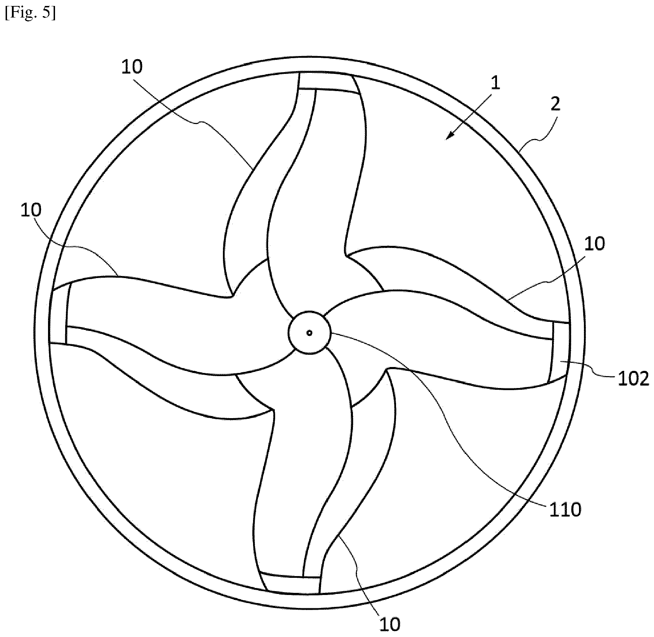

On a représenté en [Fig.1] un organe rotatif en vue latérale, décrite en lien avec les [Fig.2], [Fig.3] et [Fig.4]. La [Fig.5] représente un organe rotatif selon un mode de réalisation particulier de l'invention.

L'organe rotatif 1 décrit en [Fig.1], [Fig.2] et [Fig.4] comporte quatre pales 10. Chaque pale 10 présente une forme d'esse légèrement courbée. Chaque pale 10 comporte deux faces latérales sensiblement identiques l'une par rapport à l'autre.

Les quatre pales 10 de l'organe rotatif 1 sont reliées entre elles par un moyeu central 11 circulaire. Chaque pale 10 présente deux extrémités et la première extrémité est concave de manière à épouser le contour circulaire du moyeu central 11. Ainsi les quatre pales 10 sont en continuité avec le moyeu central 11 de manière à former une pièce unique. Le moyeu central 11 comporte en son centre un axe de rotation 110 agencé pour coopérer avec une tige d'un élément d'entrainement (non représenté) sur lequel l'organe rotatif 1 est monté. Le moyeu central 11 comporte deux faces latérales symétriques l'une par rapport à l'autre.

Chaque face latérale de chacune des pales 10 comporte une gorge 100 de sorte que deux gorges 100 d'une même pale 10 soient symétriques l'une par rapport à l'autre. Chaque gorge 100 s'étend sur toute la longueur de la pale 10 depuis le moyeu central 11. Chaque gorge 100 s'étend sur une portion du moyeu central en continuité avec ladite gorge 100 s'étendant sur la longueur de la pale 10. Chaque gorge 100 comporte une forme d'esse sensiblement similaire à celle de la pale 10 sur laquelle elle est montée.

Comme décrit en [Fig.3], chaque gorge 100 comporte deux parois, respectivement une première paroi 100.1 et une deuxième paroi 100.2, opposées et reliées par un fond 100.3. Ainsi, les deux gorges 100 d'une même pale 10 donnent à ladite pale 10 une section en forme de trident.

La section en trident comporte deux dents distales correspondant chacune à un premier bord de fuite 103 d'une des faces latérales de la pale 10. Chacun des premiers bords de fuite 103 est sensiblement parallèle à l'autre des premiers bords de fuite 103. La section en trident comporte une dent médiane correspondant à des deuxièmes bord de fuite 104. Les deuxièmes bords de fuite 104 des faces latérales d'une même pale 10 sont confondus de sorte que chaque pale 10 comporte un unique deuxième bord de fuite 104. Le deuxième bord de fuite 104 est sensiblement parallèle aux premiers bords de fuite 103, lesdits premiers bords de fuite 103 étant disposés de part et d'autre dudit deuxième bord de fuite 104. Les premiers bords de fuite 103 et le deuxième bord de fuite 104 sont ainsi dirigés dans un sens sensiblement identique et dans une direction similaire. Chaque gorge 100 est donc formée entre deux dents 103, 104 dudit trident.

Chaque premier bord de fuite 103 présente une face interne et une face externe. La face externe 105.1 d'une dent distale 103 rejoint la face externe 105.1 de l'autre dent distale 103 pour former un bord d'attaque 105 formant le dos de la pale 10. La face interne de chaque premier bord de fuite 103 est confondu avec la première paroi 100.1 de la gorge 100. La dent médiane 104 comporte deux faces externes symétriques par rapport à un plan de symétrie P de la pale 10. Chacune des faces externes du deuxième bord de fuite 104 est confondue avec la deuxième paroi 100.2 de la gorge 100. Ainsi, chaque gorge 100 a pour parois 100.1, 100.2 la face interne du premier bord de fuite 103 et la face externe du deuxième bord de fuite 104.

Comme décrit en [Fig.2], chaque pale 10 comporte sur chacune de ses faces latérales, de manière symétrique, un canal transversal 101 comportant une première extrémité 101.1, une deuxième extrémité 101.2 et un corps 101.3. La première extrémité 101.1 débouche dans la gorge 100a de ladite pale 10a le comportant. La première extrémité 101.1 du canal 101 est en continuité avec le fond 100.3a de la gorge 100a de la pale 10a le comportant de manière à former une portion du fond 100.3a de la gorge 100a. Le canal 101 traverse le moyeux central 11. La deuxième extrémité 101.2 comporte une ouverture formée dans le moyeu central 11 de manière à déboucher en vis-à-vis de la gorge 100b de la pale adjacente 10b. L'ouverture formant la deuxième extrémité 101.2 du canal 101 a une épaisseur correspondant sensiblement à un écartement des deux parois 100.1, 100.2 de la gorge 100. Ainsi, la canal transversal 101 communique entre deux pales 10a, 10b adjacentes.

Comme décrit en [Fig.1], en [Fig.2] et en [Fig.4], chaque pale 10 comporte un élément de fixation 102 monté sur une deuxième extrémité de la pale 10, ladite deuxième extrémité étant opposée à la première extrémité en continuité avec le moyeu central 11. L'élément de fixation 102 est monté sur la pale 10 de manière à former une pièce unique.

Dans un mode de réalisation particulier de l'invention décrit en [Fig.5], l'organe rotatif 1 comporte des caractéristiques similaires à celles décrites en [Fig.1], [Fig.2], [Fig.3] et [Fig.4]. Dans ce mode de réalisation, l'organe rotatif 1 est monté sur une couronne périphérique 2 de manière à former une roue de vélo. Ainsi, dans ce mode de réalisation, l'organe rotatif 1 et la couronne périphérique 2 sont moulés ensemble de manière à former une pièce unique indivisible. La couronne périphérique 2 relie les pales 10 entre elles, lesdites pales 10 étant montées sur ladite couronne périphérique 2 par les éléments de fixation.

La description qui précède explique clairement comment l'invention permet d'atteindre les objectifs qu'elle s'est fixée, à savoir proposer un organe rotatif permettant d'utiliser et d'optimiser la force du vent de manière à augmenter la force de propulsion tout en réduisant la consommation d'énergie, en proposant un organe rotatif comportant au moins trois pales, lesdites pales étant reliées entre elles par un moyeu central, ledit organe rotatif étant caractérisé en ce que chaque pale comporte deux faces latérales, au moins l'une des faces latérales comportant une gorge s'étendant depuis le moyeu central sur tout ou partie de la longueur de la pale, chaque pale comporte au moins un canal débouchant d'une part dans la gorge de ladite pale et traversant le moyeux central pour déboucher d'autre part en vis-à-vis de la gorge d'une pale adjacente à ladite pale.

En tout état de cause, l'invention ne saurait se limiter aux modes de réalisation spécifiquement décrits dans ce document, et s'étend en particulier à tous moyens équivalents et à toute combinaison techniquement opérante de ces moyens.

## Revendications

1. Organe rotatif (1) comportant au moins trois pales (10), lesdites pales (10) étant reliées entre elles par un moyeu central (11),
- Chaque pale (10) comportant deux faces latérales, au moins l'une des faces latérales comportant une gorge (100) s'étendant depuis le moyeux central (11) sur tout ou partie de la longueur de la pale (10),
- et **caractérisé en ce que** Chaque pale (10) comporte au moins un canal (101) débouchant d'une part dans la gorge (100a) de ladite pale (10a) et traversant le moyeux central (11) pour déboucher d'autre part en vis-à-vis de la gorge (100b) d'une pale (10b) adjacente à ladite pale (10a).

2. Organe rotatif (1) selon la revendication précédente, dans laquelle chaque gorge (100) comporte une première paroi (100.1) et une deuxième paroi (100.2) opposées reliées par un fond (100.3), et dans lequel le canal (101) de chaque pale (10) débouche dans le fond (100.3) de la gorge (100a) de ladite pale (10a) d'une part et dans le moyeu (11) en vis-à-vis de la gorge (100b) de ladite pale (10b) adjacente.

3. Organe rotatif (1) selon l'une des revendications précédentes, dans laquelle le canal (101) de chaque pale (10) comporte une ouverture (101.2), ladite ouverture (101.2) étant dans le moyeu (11) en vis-à-vis de la gorge (100b) de ladite pale (10b) adjacente.

4. Organe rotatif (1) selon l'une des revendications précédentes, dans laquelle chaque pale (10) comporte un élément de fixation (102) monté à l'extrémité opposée à celle reliée au moyeu central (11).

5. Organe rotatif (1) selon l'une des revendications précédentes, **caractérisé en ce que** chaque face de chaque pale (10) comporte une gorge (100) et un canal (101) montés symétriquement l'un par rapport à l'autre.

6. Organe rotatif (1) selon la revendication précédente prise en combinaison avec la revendication 2, **caractérisé en ce que** chaque face latérale de chaque pale (10) comporte un premier bord de fuite (103) formé par un bord de la première paroi (100.1) de la gorge (100) de ladite face latérale et un deuxième bord de fuite (104) formé par un bord de la deuxième paroi (100.2) de la gorge (100) de ladite face latérale.

7. Organe rotatif (1) selon la revendication précédente, dans laquelle les deuxièmes bords de fuite (104) des faces latérales d'une même pale (10) sont confondus.

8. Organe rotatif (1) selon la revendication précédente, dans laquelle chaque pale (10) présente une section en trident, l'extrémité de chaque dent (103, 104) dudit trident formant l'un des premiers (103) et deuxième bords de fuite (104), la gorge (100) de chaque face latérale de ladite pale (10) étant formée entre deux dents (103, 104) dudit trident, et dans laquelle les deux premiers bords de fuite (103) sont sensiblement parallèles entre eux.

9. Organe rotatif (1) selon l'une des revendications 4 à 8, **caractérisé en ce que** les pales (10) sont reliées entre elles par une couronne périphérique (2), chaque élément de fixation (102) de chaque pale (10) étant monté entre ladite pale (10) et ladite couronne périphérique (2).

10. Vélo comportant un organe rotatif (1) selon l'une des revendications précédentes, ledit organe rotatif (1) formant une roue dudit vélo.

11. Eolienne comportant un organe rotatif (1) selon l'une des revendications 1 à 9, ledit organe rotatif (1) formant un rotor de ladite éolienne.

## Patentansprüche

1. Rotierendes Element (1), das mindestens drei Schaufeln (10) umfasst, wobei die Schaufeln (10) durch eine zentrale Nabe (11) miteinander verbunden sind,
- wobei jede Schaufel (10) zwei Seitenflächen umfasst, mindestens eine der Seitenflächen eine Nut (100) umfasst, die sich von der zentralen Nabe (11) über die gesamte Länge der Schaufel (10) oder einen Teil davon erstreckt,
- und **dadurch gekennzeichnet, dass** jede Schaufel (10) mindestens einen Kanal (101) umfasst, der einerseits in die Nut (100a) der Schaufel (10a) mündet und andererseits die zentrale Nabe (11) zum Münden gegenüber der Nut (100b) einer Schaufel (10b) neben der Schaufel (10a) durchquert.

2. Rotierendes Element (1) nach dem vorstehenden Anspruch, wobei jede Nut (100) eine erste Wand (100.1) und eine zweite Wand (100.2) umfasst, die gegenüberliegend sind, die durch einen Boden (100.3) verbunden sind, und wobei der Kanal (101) jeder Schaufel (10) einerseits in den Boden (100.3) der Nut (100a) der Schaufel (10a) und andererseits in die Nabe (11) gegenüber der Nut (100b) der danebenliegenden Schaufel (10b) mündet.

3. Rotierendes Element (1) nach einem der vorstehenden Ansprüche, wobei der Kanal (101) jeder Schaufel (10) eine Öffnung (101.2) umfasst, wobei die Öffnung (101.2) in der Nabe (11) gegenüber der Nut (100b) der danebenliegenden Schaufel (10b) ist.

4. Rotierendes Element (1) nach einem der vorstehenden Ansprüche, wobei jede Schaufel (10) ein Befestigungselement (102) umfasst, das an dem Ende montiert ist, das demjenigen gegenüberliegt, das mit der zentralen Nabe (11) verbunden ist.

5. Rotierendes Element (1) nach einem der vorstehenden Ansprüche, **dadurch gekennzeichnet, dass** jede Fläche jeder Schaufel (10) eine Nut (100) und einen Kanal (101) umfasst, die symmetrisch zueinander montiert sind.

6. Rotierendes Element (1) nach dem vorstehenden Anspruch in Kombination mit Anspruch 2, **dadurch gekennzeichnet, dass** jede Seitenfläche jeder Schaufel (10) eine erste Hinterkante (103), die durch eine Kante der ersten Wand (100.1) der Nut (100) der Seitenfläche ausgebildet ist, und eine zweite Hinterkante (104) umfasst, die durch eine Kante der zweiten Wand (100.2) der Nut (100) der Seitenfläche ausgebildet ist.

7. Rotierendes Element (1) nach dem vorstehenden Anspruch, wobei die zweiten Hinterkanten (104) der Seitenflächen einer gleichen Schaufel (10) zusammenfallen.

8. Rotierendes Element (1) nach dem vorstehenden Anspruch, wobei jede Schaufel (10) einen Dreizackabschnitt aufweist, wobei das Ende jedes Zahns (103, 104) des Dreizacks eine der ersten (103) und der zweiten Hinterkanten (104) ausbildet, wobei die Nut (100) jeder Seitenfläche der Schaufel (10) zwischen zwei Zähnen (103, 104) des Dreizacks ausgebildet ist und wobei die zwei ersten Hinterkanten (103) im Wesentlichen parallel zueinander verlaufen.

9. Rotierendes Element (1) nach einem der Ansprüche 4 bis 8,
**dadurch gekennzeichnet, dass** die Schaufeln (10) durch einen Umfangsring (2) miteinander verbunden sind, wobei jedes Befestigungselement (102) jeder Schaufel (10) zwischen der Schaufel (10) und dem Umfangsring (2) montiert ist.

10. Fahrrad, das ein rotierendes Element (1) nach einem der vorstehenden Ansprüche umfasst, wobei das rotierende Element (1) ein Rad des Fahrrads ausbildet.

11. Windturbine, die ein rotierendes Element (1) nach einem der Ansprüche 1 bis 9 umfasst, wobei das rotierende Element (1) einen Rotor der Windturbine ausbildet.

## Claims

1. A rotary member (1) comprising at least three blades (10), said blades (10) being interconnected by a central hub (11),
- Each blade (10) having two side faces, and at least one of the side faces has a groove (100) extending from the central hub (11) over all or part of the length of the blade (10),
- and **characterized in that** each blade (10) comprises at least one channel (101) opening on the one hand into the groove (100a) of said blade (10a) and passing through the central hub (11) to open on the other hand opposite the groove (100b) of a blade (10b) adjacent to said blade (10a).

2. The rotary member (1) according to the preceding claim, wherein each groove (100) comprises a first wall (100.1) and a second opposite wall (100.2) connected by a bottom (100.3), and wherein the channel (101) of each blade (10) opens into the bottom (100.3) of the groove (100a) of said blade (10a) on the one hand and into the hub (11) opposite the groove (100b) of said adjacent blade (10b).

3. The rotary member (1) according to one of the preceding claims, wherein the channel (101) of each blade (10) comprises an opening (101.2), said opening (101.2) being in the hub (11) opposite the groove (100b) of said adjacent blade (10b).

4. The rotary member (1) according to one of the preceding claims, wherein each blade (10) has a fastening element (102) mounted at the end opposite the end connected to the central hub (11).

5. The rotary member (1) according to one of the preceding claims, **characterized in that** each face of each blade (10) comprises a groove (100) and a channel (101) mounted symmetrically with respect to one another.

6. The rotary member (1) according to the preceding claim taken in combination with claim 2, **characterized in that** each lateral face of each blade (10) comprises a first trailing edge (103) formed by an edge of the first wall (100.1) of the groove (100) of said lateral face and a second trailing edge (104) formed by an edge of the second wall (100.2) of the groove (100) of said lateral face.

7. The rotary member (1) according to the preceding claim, wherein the second trailing edges (104) of the side faces of the same blade (10) are merged.

8. The rotary member (1) according to the preceding claim, wherein each blade (10) has a trident cross-section, the end of each tooth (103, 104) of said trident forming one of the first (103) and second (104) trailing edges, the groove (100) of each side face of said blade (10) being formed between two teeth (103, 104) of said trident, and wherein the two first trailing edges (103) are substantially parallel to one another.

9. The rotary member (1) according to one of claims 4 to 8,
**characterized in that** the blades (10) are interconnected by a peripheral ring (2), each fastening element (102) of each blade (10) being mounted between said blade (10) and said peripheral ring (2).

10. A bicycle comprising a rotating member (1) according to one of the preceding claims, said rotating member (1) forming a wheel of said bicycle.

11. A wind turbine comprising a rotary member (1) according to one of claims 1 to 9, said rotary member (1) forming a rotor of said wind turbine.
